# FASCICULE DE BREVET EUROPEEN

(11) **EP 3 870 458 B1**
(45) Date de publication et mention de la délivrance du brevet: **13.08.2025**
(21) Numéro de dépôt: 19813083.3
(22) Date de dépôt: 22.10.2019
(51) Int. Cl.: B60C 1/00, C08L 9/06, C08L 21/00, C08K 3/04, C08L 7/00, C08L 9/00, B60C 11/00

(54) **PNEUMATIQUE DE VEHICULE AGRICOLE**
REIFEN FÜR LANDWIRTSCHAFTLICHES FAHRZEUG
AGRICULTURAL VEHICLE TYRE

(30) Priorité: 25.10.2018 FR 1859853; 31.01.2019 FR 1900908
(43) Date de publication de la demande: 01.09.2021
(73) Titulaire: COMPAGNIE GENERALE DES ETABLISSEMENTS MICHELIN, 63040 Clermont-Ferrand (FR)
(72) Inventeur: CABIOCH, Jean-Luc, 63040 CLERMONT-FERRAND CEDEX 9 (FR); MONOD, Anthony, 63040 CLERMONT-FERRAND CEDEX 9 (FR)
(74) Mandataire: M.F.P. Michelin
(86) Numéro de dépôt international: PCT/FR2019/052506
(87) Numéro de publication internationale: WO 2020/084246

(56) Documents cités:
- WO-A1-2010/126500
- WO-A1-2017/109400
- WO-A1-2018/234701

## Description

La présente invention concerne un pneumatique pour véhicule à usage agricole, tel qu'un tracteur agricole ou un véhicule agro-industriel.

La présente invention concerne plus particulièrement la bande de roulement d'un tel pneumatique, destinée à entrer en contact avec un sol par l'intermédiaire d'une surface de roulement.

Dans ce qui suit, les directions circonférentielle, axiale et radiale désignent respectivement une direction tangente à la surface de roulement du pneumatique et orientée selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

La bande de roulement d'un pneumatique pour tracteur agricole comprend généralement une pluralité de barrettes. Les barrettes sont des éléments en relief par rapport à une surface de fond qui est une surface de révolution autour de l'axe de rotation du pneumatique.

Une barrette a généralement une forme globalement parallélépipédique allongée, constituée d'au moins une portion rectiligne ou curviligne, et est séparée des barrettes adjacentes par des sillons. Une barrette peut être constituée d'une succession de portions rectilignes, telle que décrite dans les documents US3603370, US4383567, EP795427 ou avoir une forme curviligne, telle que présentée dans les documents US4446902, EP903249, EP1831034.

Selon la direction radiale, une barrette s'étend à partir de la surface de fond jusqu'à la surface de roulement, la distance radiale entre la surface de fond et la surface de roulement définissant la hauteur de barrette. La face radialement extérieure de la barrette, appartenant à la surface de roulement, qui entre en contact avec le sol, lors du passage de la barrette dans l'aire de contact du pneumatique, est appelée face de contact de la barrette.

Selon la direction axiale, une barrette s'étend vers l'intérieur, en direction du plan équatorial du pneumatique, à partir d'une face d'extrémité axialement extérieure jusqu'à une face d'extrémité axialement intérieure.

Selon la direction circonférentielle, une barrette s'étend, selon un sens de rotation préférentiel du pneumatique, à partir d'une face d'attaque jusqu'à une face de fuite. Par sens de rotation préférentiel, on entend le sens de rotation préconisé par le fabricant du pneumatique pour une utilisation optimale du pneumatique. A titre d'exemple, dans le cas d'une bande de roulement comprenant deux rangées de barrettes en V ou en chevrons, le pneumatique a un sens de rotation préférentiel selon la pointe des chevrons. La face d'attaque est, par définition, la face dont l'arête radialement extérieure ou arête d'attaque entre en premier en contact avec le sol, lors du passage de la barrette dans la surface de contact du pneumatique avec le sol, au cours de la rotation du pneumatique. La face de fuite est, par définition, la face dont l'arête radialement extérieure ou arête de fuite entre en dernier en contact avec le sol, lors du passage de la barrette dans la surface de contact du pneumatique avec le sol, au cours de la rotation du pneumatique. Selon le sens de rotation, la face d'attaque est dite en avant par rapport à la face de fuite.

Une barrette a usuellement, mais pas obligatoirement, un angle d'inclinaison moyen, par rapport à la direction circonférentielle, proche de 45°. En effet, cet angle d'inclinaison moyen permet en particulier un bon compromis entre la traction en champ et le confort vibratoire. La traction en champ est d'autant meilleure que la barrette est axiale, c'est-à-dire que son angle d'inclinaison moyen, par rapport à la direction circonférentielle est proche de 90°, alors que le confort vibratoire est d'autant meilleur que la barrette est circonférentielle, c'est-à-dire que son angle d'inclinaison moyen, par rapport à la direction circonférentielle, est proche de 0°. Il est notoire que la traction en champ est plus fortement déterminée par l'angle de la barrette au niveau de l'épaule, ce qui a amené certains concepteurs de pneumatiques à proposer une forme de barrette très incurvée, conduisant à une barrette sensiblement axiale à l'épaule et sensiblement circonférentielle au milieu de la bande de roulement.

La bande de roulement d'un pneumatique pour tracteur agricole comprend généralement deux rangées de barrettes telles que précédemment décrites. Cette distribution de barrettes inclinées par rapport à la direction circonférentielle confère à la bande de roulement une forme en V couramment dénommée motif en chevrons. Les deux rangées de barrettes présentent une symétrie par rapport au plan équatorial du pneumatique, avec le plus souvent un décalage circonférentiel entre les deux rangées de barrettes, résultant d'une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

La bande de roulement d'un pneumatique pour tracteur agricole comprend ainsi deux types d'éléments : les barrettes, qui sont les éléments en reliefs, et les sillons, qui sont les portions de la surface de fond séparant les barrettes. Ces deux types d'éléments sont sollicités de façon très différente. Les barrettes sont plus particulièrement sensibles à l'usure en usage routier et aux agressions par les cailloux en usage non routier ou en champ. Les sillons, entre les barrettes, sont principalement agressés par les chaumes résiduels après récolte, en usage en champ, et sont également sensibles aux agressions chimiques par l'ozone dans la mesure où ces sillons ne sont pas soumis à l'usure.

Bien que non limitée à cette application, l'invention sera plus particulièrement décrite en référence à un engin agricole polyvalent, pouvant rouler aussi bien dans les champs que sur route, tel qu'un tracteur agricole.

Un pneumatique pour tracteur agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour tracteur agricole, et en particulier sa bande de roulement, doit présenter un compromis de performances, notamment entre la traction en champ, la résistance aux arrachements, la résistance à l'usure sur route, la résistance au roulement, le confort vibratoire sur route.

Par ailleurs, la demande en pneumatiques pour véhicules agricoles permettant de rouler à des vitesses élevées (pouvant aller autour de 65 km/h) sur routes bitumées est en constante augmentation, afin de diminuer les temps de trajet entre les zones de travail (champs, domaines forestiers, etc.) et les lieux d'entrepôt (du véhicule, du matériel agricole, des denrées récoltées, etc.).

Or, l'augmentation de la vitesse s'accompagne d'une augmentation de la consommation en carburant. Ainsi, l'impact de la résistance au roulement devient une composante de plus en plus considérée pour les pneumatiques de véhicules agricoles. Des solutions ont été proposées pour réduire la résistance au roulement lors de roulage sur sol bitumeux sans impacter les autres propriétés des pneumatiques pour véhicules agricoles, en jouant sur la pression de gonflage en direct en fonction de la nature du sol sur lequel le véhicule agricole roule (WO2016/071158).

L'augmentation de la vitesse de roulage sur sol bitumeux engendre également la nécessité de prendre en considération de nouvelles performances auxquelles doivent répondre les pneumatiques pour véhicules agricoles destinés à rouler à des vitesses élevées sur sol bitumeux, notamment l'adhérence sur sol mouillé.

Il existe donc un réel besoin de disposer de pneumatiques pour véhicules agricoles permettant au véhicule de rouler à des vitesses élevées sur sol bitumeux qui présente à la fois une faible résistance au roulement, afin de diminuer la consommation de carburant, et une bonne adhérence, notamment sur sol mouillé, et ce sans pénaliser les aux propriétés spécifiquement liées aux pneumatiques pour véhicules agricoles.

Poursuivant ses recherches, la Demanderesse a découvert que l'utilisation d'une matrice élastomérique spécifique comprenant un mélange de charge renforçante particulier permet de résoudre le problème technique précité.

Ainsi, la présente invention a pour objet un pneumatique pour véhicule agricole comprenant une bande de roulement destinée à venir en contact avec un sol qui comprend une pluralité de barrettes séparées les unes des autres par des sillons, chaque barrette s'étendant radialement vers l'extérieur, sur une hauteur radiale H, à partir d'une surface de fond jusqu'à une face de contact, les sillons étant constitués par les portions de la surface de fond séparant les barrettes, dans lequel la bande de roulement comprend une composition de caoutchouc à base :
- d'une matrice élastomérique comprenant au moins un copolymère de butadiène-styrène présentant une température de transition vitreuse comprise dans un domaine allant de - 60°C à -10°C,
- de 30 à moins de 120 parties en poids pour cent parties en poids d'élastomère, pce, de charge renforçante, la charge renforçante comprenant un mélange de silice et de noir de carbone, la charge renforçante comprend entre 33% et 100% en poids de silice par rapport au poids total de la charge renforçante, le taux de silice dans la composition étant compris entre 10 et 80 pce, et
- un système de réticulation,
**la composition comprenant de 35 à 65 pce de copolymère de butadiène-styrène présentant une température de transition vitreuse comprise dans un domaine allant de -60°C à -10°C, de 20 à 40 pce de polybutadiène et de 20 à 40 pce de polyisoprène, le taux total de de copolymère de butadiène-styrène présentant une température de transition vitreuse comprise dans un domaine allant de -60°C à -10°C, de polybutadiène et de polyisoprène, dans la composition, étant compris dans un domaine allant de 80 à 100 pce.**

### I- DÉFINITIONS

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on décrit un intervalle de valeurs par l'expression "de a à b", on décrit également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Toutes les valeurs de température de transition vitreuse « Tg » décrite dans la présente sont mesurées de manière connue par DSC (Differential Scanning Calorimetry) selon la norme ASTM D3418 (1999).

### II- DESCRIPTION DE L'INVENTION

### II-1 Matrice élastomérique

Selon l'invention, la matrice élastomérique de la composition de la bande de roulement du pneumatique comprend au moins un, c'est-à-dire un ou plusieurs, copolymère de butadiène-styrène (SBR) présentant une température de transition vitreuse (Tg) comprise dans un domaine allant de -60°C à -10°C.

**En outre, la composition de la bande de roulement du pneumatique selon l'invention comprend** :
- **de 35 à 65 pce de copolymère de butadiène-styrène présentant une température de transition vitreuse comprise dans un domaine allant de -60°C à -10°C,**
- **de 20 à 40 pce de polybutadiène, et**
- **de 20 à 40 pce de polyisoprène (de préférence de caoutchouc naturel),**
**le taux total de de copolymère de butadiène-styrène présentant une température de transition vitreuse comprise dans un domaine allant de -60°C à -10°C, de polybutadiène et de polyisoprène, dans la composition, étant compris dans un domaine allant de 80 à 100 pce, de préférence de 90 à 100 pce, de préférence encore étant de 100 pce.**

Avantageusement, la température de transition vitreuse du copolymère de butadiène-styrène présentant une température de transition vitreuse comprise dans un domaine allant de -60°C à - 10°C est comprise entre -50°C et -15°C.

Le copolymère de butadiène-styrène (SBR) présentant une température de transition vitreuse (Tg) comprise dans un domaine allant de -60°C à -10°C peut être exclusivement constitué de monomères de styrène et de monomères de butadiène, c'est-à-dire que la somme des pourcentages molaires de monomères de styrène et de monomères butadiène est égale à 100%. Il peut également comprendre, à titre minoritaire, des monomères autres que le styrène et le butadiène, de préférence moins de 20%, de préférence moins de 10%, de préférence encore moins de 5%, en poids par rapport au poids total du copolymère.

On notera que le SBR peut être préparé en émulsion (ESBR) ou en solution (SSBR). Qu'il s'agisse de ESBR ou de SSBR, le SBR peut être de toute microstructure dès lors que celle-ci engendre une Tg comprise dans un domaine allant de -60°C à -10°C, de préférence de -50°C à -15°C. On peut utiliser notamment un SBR ayant une faible teneur en styrène, par exemple comprise allant de 35 à 55% en poids du copolymère, et une teneur en liaisons vinyliques de la partie butadiénique comprise entre 4 % et 70%, de préférence comprise entre 10 et 40% en poids de la partie butadiénique du copolymère. Avantageusement, le copolymère de butadiène-styrène présentant une température de transition vitreuse comprise dans un domaine allant de -60°C à -10°C est un copolymère de butadiène-styrène préparé en solution.

Le copolymère de butadiène-styrène (SBR) présentant une température de transition vitreuse (Tg) comprise dans un domaine allant de -60°C à -10°C, utilisable selon l'invention, peut être par exemple couplés et/ou étoilés ou encore fonctionnalisés avec un agent de couplage et/ou d'étoilage ou de fonctionnalisation. Pour un couplage avec du noir de carbone, on peut citer par exemple des groupes fonctionnels comprenant une liaison C-Sn ou des groupes fonctionnels aminés tels que la benzophénone par exemple ; pour un couplage à une charge inorganique renforçante telle que la silice, on peut citer par exemple des groupes fonctionnels silanol ou polysiloxane ayant une extrémité silanol (tels que décrits par exemple dans FR 2 740 778 ou US 6,013,718), des groupes alkoxysilane (tels que décrits par exemple dans FR 2 765 882 ou US 5,977,238), des groupes carboxyliques (tels que décrits par exemple dans WO 01/92402 ou US 6,815,473, WO 2004/096865 ou US 2006/0089445) ou encore des groupes polyéthers (tels que décrits par exemple dans EP 1 127 909 ou US 6,503,973). Avantageusement, le copolymère de butadiène-styrène présentant une température de transition vitreuse comprise dans un domaine allant de - 60°C à -10°C est un fonctionnalisé avec un agent de couplage. De préférence, l'agent de couplage est le 3-Mercaptopropyltriethoxysilane.

**Le** taux de copolymère de butadiène-styrène présentant une température de transition vitreuse comprise dans un domaine allant de -60°C à -10°C peut également être compris dans un domaine allant de de 40 à 60 pce.

### II-2 Charge renforçante

Selon l'invention, la composition de la bande de roulement du pneumatique comprend de 30 à moins de 120 pce de charge renforçante, la charge renforçante comprenant un mélange de silice et de noir de carbone, la charge renforçante comprend entre 33% et 100% en poids de silice par rapport au poids total de la charge renforçante, le taux de silice dans la composition étant compris entre 10 et 80 pce.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1). La surface spécifique BET des noirs de carbone est mesurée selon la norme D6556-10 [méthode multipoints (au minimum 5 points) - gaz : azote - domaine de pression relative P/P0 : 0.1 à 0.3]. Avantageusement, le noir de carbone présente une surface spécifique BET comprise entre 70 et 150 m²/g, de préférence entre 100 et 120 m²/g.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack^{®} » de la série CRX2000 » ou de la série « CRX4000 » de la société Cabot Corporation.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

Bien entendu pourraient être également utilisés des mélanges des agents de couplage précédemment décrits.

Typiquement le taux d'agent de couplage représente de 0,5% à 15% en poids par rapport à la quantité de charge inorganique renforçante. Son taux est préférentiellement compris dans un domaine allant de 0,5 à 20 pce, plus préférentiellement compris dans un domaine allant de 3 à 3 pce. Ce taux est aisément ajusté par l'homme du métier selon le taux de charge inorganique renforçante utilisé dans la composition de l'invention.

Comme indiqué ci-dessus, la composition de la bande de roulement du pneumatique selon l'invention comprend de 30 à moins de 120 pce de charge renforçante, la charge renforçante comprenant un mélange de silice et de noir de carbone, la charge renforçante comprend entre 33% et 100% en poids de silice par rapport au poids total de la charge renforçante, le taux de silice dans la composition étant compris entre 10 et 80 pce
Avantageusement, la charge renforçante comprend entre 33% et 70% en poids, de préférence ente 35% et 67% en poids, de silice par rapport au poids total de la charge renforçante. Plus particulièrement, la charge renforçante comprend préférentiellement plus de 50% en poids, de préférence entre 50% et 67% en poids, de silice par rapport au poids total de la charge renforçante.

Avantageusement, le taux de silice dans la composition est compris entre 15 et 60 pce, et/ou le taux de noir de carbone dans la composition est compris entre 5 et 20 pce. Alternativement, de manière avantageuse, le taux de silice dans la composition est compris entre 15 et 60 pce, et/ou le taux de noir de carbone dans la composition est compris entre 5 et 35 pce, de préférence entre 10 et 35 pce, de préférence encore entre 11 et 20 pce.

Quels que soient les taux respectifs en noir de carbone et en silice, le taux total de charge renforçante dans la composition est avantageusement compris entre 35 et 90 pce.

Par ailleurs, la composition de la bande de roulement du pneumatique selon l'invention peut comprendre une charge non-renforçante mais cela n'est pas préférable.

Ainsi, la composition de la bande de roulement du pneumatique selon l'invention ne comprend avantageusement pas de charge non-renforçante ou en comprend moins de 25 pce, de préférence moins de 20 pce, de préférence encore moins de 10 pce, et plus préférentiellement moins de 5 pce. De manière particulièrement préférée, la composition de la bande de roulement du pneumatique selon l'invention ne comprend pas de charge non-renforçante.

A titre d'exemples de charges non-renforçantes (ou charges inertes) connues par l'homme du métier, on citera notamment celles choisies dans le groupe constitué par les cendres (i.e., résidus de combustion), les microparticules de carbonates de calcium naturels (craie) ou synthétiques, les silicates synthétiques ou naturels (tels que kaolin, talc, mica, cloisite), les oxydes de titane, les alumines, les aluminosilicates (argile, bentonite), et leurs mélanges.

### II-3 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le système de réticulation comprend ainsi préférentiellement du soufre moléculaire et/ou au moins un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### II-4 Autres additifs possibles

Les compositions de caoutchouc de la bande de roulement du pneumatique selon l'invention peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

La composition peut notamment comprendre une résine plastifiante hydrocarbonée. La résine plastifiante hydrocarbonée est choisie dans le groupe constitué par les résines d'homopolymères ou copolymères de cyclopentadiène ou dicyclopentadiène, les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et leurs mélanges. Avantageusement, le taux de résine plastifiante hydrocarbonée dans la composition de la bande de roulement du pneumatique selon l'invention est compris dans un domaine allant de 2 à 20 pce, de préférence de 2 à 10 pce. De telles résines sont décrites par exemple paragraphe I-4-1 de la demande WO 2016/202968.

Par ailleurs, la composition de la bande de roulement du pneumatique selon l'invention ne comprend avantageusement pas d'huile plastifiante ou en comprend moins de 5 pce. A titre d'exemple d'huiles plastifiantes, on peut citer les plastifiants liquides mentionnés au paragraphe I-4-2 de la demande WO 2016/202968.

### II-5 Préparation des compositions de caoutchouc

La composition de caoutchouc conforme à l'invention peut être fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges éventuelles, les éventuels autres additifs divers, à l'exception du système de réticulation. L'incorporation de la charge éventuelle à l'élastomère peut être réalisée en une ou plusieurs fois en malaxant thermomécaniquement. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme une bande de roulement de pneumatique de véhicule agricole. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, sous pression.

### II-6 Pneumatiques

La présente invention concerne un pneumatique pour véhicules agricole.

Les pneumatiques de véhicule agricole se caractérisent notamment par leur diamètre important, allant généralement de 20 à 63 pouces, de préférence de 28 à 54 pouces, de préférence encore de 36 à 42 pouces.

En outre, leur bande de roulement peut avoir un ou plusieurs rainures dont la profondeur moyenne va de 15 à 120 mm, de préférence 65 à 120 mm. Par ailleurs, le taux moyen de creux volumique sur l'ensemble de leur bande de roulement peut être compris dans un domaine allant de 5 à 40 %, de préférence de de 5 à 25 %.

### III- BREVE DESCRIPTIONS DES FIGURES

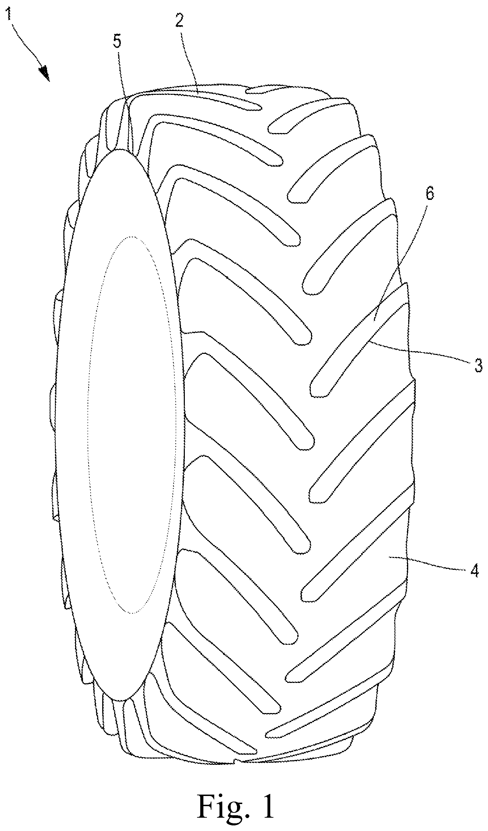

La présente invention sera mieux comprise à l'aide de la figure 1, schématique et non représentée à l'échelle, joints en annexe, représentant une vue en perspective d'un pneumatique 1 pour véhicule à usage agricole, tel qu'un tracteur.

Sur cette figure, le pneumatique 1 présente une bande de roulement 2, destinée à entrer en contact avec un sol par l'intermédiaire d'une surface de roulement, et qui comprend des barrettes 3 séparées les unes des autres par des sillons 4. Chaque barrette 3 s'étend radialement vers l'extérieur, à partir d'une surface de fond 5 jusqu'à une face de contact 6, positionnée dans la surface de roulement. Les sillons 4 sont constitués par les portions de la surface de fond 5 séparant les barrettes 3.

En particulier, dans le cas d'un pneumatique pour tracteur agricole tel que représenté sur la figure, la pluralité de barrettes 3 de la bande de roulement est répartie en une première rangée et une seconde rangée de barrettes globalement symétriques par rapport au plan équatorial du pneumatique, passant par le milieu de la bande roulement 2 et perpendiculaire à l'axe de rotation du pneumatique.

### IV- EXEMPLES

### IV-1 Mesures et tests utilisés

### Détermination de la température de transition vitreuse

La température de transition vitreuse, Tg, est mesurée dans la présente demande par la technique DSC (Differential Scanning Calorimetry) sur un appareil de dénomination « Setaram DSC 131 ». Le programme de température utilisé correspond à une montée en température de-120°C à 150°C à la vitesse de 10°C/min. On pourra se référer à la méthode décrite dans la demande WO 2007/054224 (page 11).

### Propriétés dynamiques

Les propriétés dynamiques tan(δ)max à -20°C, 0°C et 60°C sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10Hz, dans les conditions définies de température par exemple à -20°C, 0°C ou 60°C selon la norme ASTM D 1349-99, ou selon les cas à une température différente. On effectue un balayage en amplitude de déformation de 0,1 à 50% (cycle aller), puis de 50% à 0,1% (cycle retour). Les résultats exploités sont le facteur de perte tan(δ). Pour le cycle retour, on indique la valeur maximale de tan(δ) observée, noté tan(δ)max.

### IV-3 Préparation des compositions

On procède pour les essais qui suivent de la manière suivante : on introduit dans un mélangeur à palettes (taux de remplissage final : environ 70% en volume), dont la température initiale de cuve est d'environ 50°C, successivement, l'élastomère, les charges renforçantes, ainsi que les divers autres ingrédients à l'exception du système de réticulation. On conduit alors un travail thermomécanique (phase non-productive) en une étape, qui dure au total environ 4 à 5 min, jusqu'à atteindre une température maximale de « tombée » de 165°C.

On récupère le mélange ainsi obtenu, on le refroidit puis on incorpore le système de réticulation (peroxyde ou soufre selon le cas), sur un mélangeur (homo-finisseur) entre 23°C et 50°C respectivement, en mélangeant le tout (phase productive) dans un outil à cylindre pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

### IV-3 Essais de compositions de caoutchouc

Six compositions de caoutchouc ont été préparées comme indiqué au point **IV-2** ci-dessus, trois conformes à l'invention (notées ci-après C1 à C3) et deux non conformes (composition témoin notée ci-après T1 et T2). Ces six formulations contiennent toutes en plus de la matrice élastomérique et les charges renforçantes présentées dans le Tableau 1 ci-après : 4 pce de résine plastifiante (Résine en C5/C9, « Résine ECR-373 » de la société ExxonMobil), 1,5 pce de résine tackifiante (« Escorez 1102 » de société EXXON (Mn 1370 g/mol ; Ip= 2,3)), 1,6 pce de soufre, 1,6 pce d'accélérateur de vulcanisation (N-ter-butyl-2-benzothiazyle sulfénamide, « Santocure TBBS » de la société Flexsys), 1,5 pce d'oxyde de zinc grade industriel (société Umicore), 1 pce d'acide stéarique (« Pristerene 4931 » de la société Uniqema), 3 pce d'anti-oxydant (N-1,3-diméthylbutyl-N-phénylparaphénylènediamine, « Santoflex 6-PPD » de la société Flexsys), 2 pce de cire anti-ozone (« VARAZON 4959 » de la société Sasol Wax) et 0,2 pce de « CTP » (N-cyclohexylthiophtalimide commercialisé sous dénomination, « Vulkalent G » par la société Lanxess). La nature et la teneur (en pce) de la matrice élastomérique et du système de charge renforçante, ainsi que les propriétés de ces formulations sont présentées dans le tableau 1 ci-après.

La composition témoin T1 diffère des compositions conformes à l'invention en ce que le système de charge renforçante n'est pas conforme à l'invention. La composition témoin T2 diffère des compositions conformes à l'invention, en outre, en ce que la température de transition vitreuse du copolymère de butadiène-styrène utilisé n'est pas comprise dans un domaine allant de -60°C à -10°C.

Les résultats de tan(δ)max sont présentés en « base 100 » par rapport à la composition témoin T1. Pour les valeurs de tan(δ)max à -20°C et 0°C, plus la valeur est élevée, plus la composition aura une adhérence sur sol mouillé améliorée. Par ailleurs, plus la valeur plus de tan(δ)max à 60°C est basse, plus la composition aura une hystérèse faible et donc une résistance au roulement améliorée.

**Tableau 1**

| | **T1** | **T2** | **C1** | **C2** | **C3** |
|---|---|---|---|---|---|
| SBR1 (1) | 50 | - | 50 | 50 | 50 |
| SBR2 (2) | - | 50 | - | - | - |
| BR (3) | 30 | 30 | 30 | 30 | 30 |
| NR (4) | 20 | 20 | 20 | 20 | 20 |
| N234 (5) | 47 | 47 | 30 | 24 | 17 |
| Silice (6) | - | - | 17 | 23 | 30 |
| Agent de couplage (7) | - | - | 1.7 | 2.3 | 3.0 |
| | | | | | |
| Tan(δ) max (60°C) | 100 | 71 | 86 | 81 | 76 |
| Tan(δ) max (0°C) | 100 | 54 | 103 | 106 | 106 |
| Tan(δ) max (-20°C) | 100 | 50 | 115 | 119 | 110 |

| | | | | | |
|---|---|---|---|---|---|
| (1) SBR (étoilé 3-Mercaptopropyltriethoxysilane) avec 41% de motif styrène et 24% de motif 1,2 de la partie butadiénique (Tg -25°C) (2) SBR (étoilé Sn) avec 15,5% de motif styrène et 35% de motif 1,2 de la partie butadiénique (Tg -65°C) (3) Polybutadiène avec 0,5% de motif 1,2 et 97% de 1,4-cis (Tg = -108°C) (4) Caoutchouc naturel (5) Noir de carbone N234 (dénomination selon la norme ASTM D-1765) (6) Silice « Zeosil 1165 MP » de la société Rhodia type « HDS » (7) TESPT (« Si69 » de la société Degussa) | | | | | |

Ces résultats montrent que la substitution d'un copolymère de butadiène-styrène présentant une température de transition vitreuse de -25°C par un copolymère de butadiène-styrène présentant une température de transition vitreuse de -65°C permet d'améliorer l'hystérèse, mais pénalise grandement l'adhérence sur sol mouillé. Ainsi, seules les compositions conformes à l'invention, présentant au moins un copolymère de butadiène-styrène présentant une température de transition vitreuse comprise dans un domaine allant de -60°C à -10°C et le système de charge renforçante spécifique conforme à l'invention, permettent d'améliorer à la fois l'hystérèse et l'adhérence sur sol mouillé, et ce sans pénaliser les propriétés attendues d'un pneumatiques pour véhicules agricoles.

## Revendications

1. Pneumatique (1) pour véhicule agricole comprenant une bande de roulement (2) destinée à venir en contact avec un sol qui comprend une pluralité de barrettes (3) séparées les unes des autres par des sillons (4), chaque barrette (3) s'étendant radialement vers l'extérieur, sur une hauteur radiale H, à partir d'une surface de fond (5) jusqu'à une face de contact (6), les sillons (4) étant constitués par les portions de la surface de fond (5) séparant les barrettes (3), **caractérisé en ce que** la bande de roulement comprend une composition de caoutchouc à base :
- d'une matrice élastomérique comprenant au moins un copolymère de butadiène-styrène présentant une température de transition vitreuse comprise dans un domaine allant de -60°C à -10°C, la température de transition vitreuse étant mesurée par DSC (Differential Scanning Calorimetry) selon la norme ASTM D3418 (1999),
- de 30 à moins de 120 parties en poids pour cent parties en poids d'élastomère, pce, de charge renforçante, la charge renforçante comprenant un mélange de silice et de noir de carbone, la charge renforçante comprend entre 33% et 100% en poids de silice par rapport au poids total de la charge renforçante, le taux de silice dans la composition étant compris entre 10 et 80 pce, et
- un système de réticulation,
la composition comprenant de 35 à 65 pce de copolymère de butadiène-styrène présentant une température de transition vitreuse comprise dans un domaine allant de -60°C à -10°C, de 20 à 40 pce de polybutadiène et de 20 à 40 pce de polyisoprène, le taux total de copolymère de butadiène-styrène présentant une température de transition vitreuse comprise dans un domaine allant de -60°C à -10°C, de polybutadiène et de polyisoprène, dans la composition, étant compris dans un domaine allant de 80 à 100 pce.

2. Pneumatique selon l'une quelconque des revendications précédentes, dans lequel le copolymère de butadiène-styrène présentant une température de transition vitreuse comprise dans un domaine allant de -60°C à -10°C est un copolymère de butadiène-styrène préparé en solution.

3. Pneumatique selon l'une quelconque des revendications précédentes, dans lequel la température de transition vitreuse du copolymère de butadiène-styrène présentant une température de transition vitreuse comprise dans un domaine allant de -60°C à -10°C est comprise entre -50°C et -15°C.

4. Pneumatique selon l'une quelconque des revendications précédentes, dans lequel le taux total de copolymère de butadiène-styrène présentant une température de transition vitreuse comprise dans un domaine allant de -60°C à -10°C, de polybutadiène et de polyisoprène, dans la composition, est compris dans un domaine allant de 90 à 100 pce, de préférence encore étant de 100 pce.

5. Pneumatique selon l'une quelconque des revendications précédentes, dans lequel la charge renforçante comprend entre 33% et 70% en poids, de préférence ente 35% et 67% en poids, de silice par rapport au poids total de la charge renforçante.

6. Pneumatique selon l'une quelconque des revendications précédentes, dans lequel le taux de silice dans la composition est compris entre 15 et 60 pce, et le taux de noir de carbone dans la composition est compris entre 5 et 35 pce, de préférence entre 10 et 35 pce.

7. Pneumatique selon l'une quelconque des revendications précédentes, dans lequel le noir de carbone présente une surface spécifique BET comprise entre 70 et 150 m²/g, de préférence entre 100 et 120 m²/g.

8. Pneumatique selon l'une quelconque des revendications précédentes, dans lequel le taux total de charge renforçante dans la composition est compris entre 35 et 90 pce.

9. Pneumatique selon l'une quelconque des revendications précédentes, dans lequel la composition ne comprend pas d'huile plastifiante ou en comprend moins de 5 pce.

## Patentansprüche

1. Luftreifen (1) für landwirtschaftliche Fahrzeuge, der einen Laufstreifen (2) umfasst, welcher dazu bestimmt ist, mit einem Boden in Kontakt zu kommen, wobei er eine Mehrzahl an Stollen (3) umfasst, die durch Furchen (4) voneinander getrennt sind, wobei die Stollen (3) sich jeweils radial nach außen erstrecken, über eine Höhe H ausgehend von einer Grundfläche (5) bis zu einer Kontaktfläche (6), wobei die Furchen (4) aus den Abschnitten der Grundfläche (5) bestehen, welche die Stollen (3) voneinander trennen, **dadurch gekennzeichnet, dass** der Laufstreifen eine Kautschukzusammensetzung auf Basis von Folgendem umfasst:
- einer Elastomermatrix, die mindestens ein Butadien-Styrol-Copolymer umfasst, dessen Glasübergangstemperatur im Bereich von -60 bis -10 °C liegt, wobei die Glasübergangstemperatur mittels DSC (Differential Scanning Calorimetry) gemäß der Norm ASTM D3418 (1999) gemessen wird,
- 30 bis weniger als 120 Gewichtsteilen auf hundert Elastomergewichtsteile, phe, an verstärkendem Füllstoff, wobei der verstärkende Füllstoff eine Mischung aus Siliciumdioxid und Ruß umfasst, wobei der verstärkende Füllstoff unter Bezugnahme auf das Gesamtgewicht des verstärkenden Füllstoffs zwischen 33 % und 100 % nach Gewicht an Siliciumdioxid umfasst, wobei der Gehalt an Siliciiumdioxid in der Zusammensetzung im Bereich von 10 bis 80 phe liegt, und
- einem Vernetzungssystem,
wobei die Zusammensetzung 35 bis 65 phe an Butadien-Styrol-Copolymer, welches eine Glasübergangstemperatur im Bereich von -60 °C bis -10 °C aufweist, 20 bis 40 phe an Polybutadien und 20 bis 40 phe an Polyisopren umfasst, wobei der Gesamtgehalt an Butadien-Styrol-Copolymer, welches eine Glasübergangstemperatur im Bereich von -60°C bis -10 °C aufweist, an Polybutadien und an Polyisopren in der Zusammensetzung im Bereich von 80 bis 100 phe liegt.

2. Luftreifen nach einem beliebigen der vorhergehenden Ansprüche, wobei es sich bei dem Butadien-Styrol-Copolymer, welches eine Glasübergangstemperatur im Bereich von -60 °C bis -10 °C aufweist, um ein in Lösung hergestelltes Butadien-Styrol-Copolymer handelt.

3. Luftreifen nach einem beliebigen der vorhergehenden Ansprüche, wobei die Glasübergangstemperatur des Butadien-Styrol-Copolymers, welches eine Glasübergangstemperatur im Bereich von -60 °C bis -10 °C aufweist, im Bereich von -50 °C bis -15 °C liegt.

4. Luftreifen nach einem beliebigen der vorhergehenden Ansprüche, wobei der Gesamtgehalt an Butadien-Styrol-Copolymer, welches eine Glasübergangstemperatur im Bereich von -60 °C bis -10 °C aufweist, an Polybutadien und an Polyisopren in der Zusammensetzung im Bereich von 90 bis 100 phe liegt, wobei er noch stärker bevorzugt 100 phe beträgt.

5. Luftreifen nach einem beliebigen der vorhergehenden Ansprüche, wobei der verstärkende Füllstoff zwischen 33 % und 70 % nach Gewicht, vorzugsweise zwischen 35 % und 67 % nach Gewicht, an Siliciumdioxid umfasst, unter Bezugnahme auf das Gesamtgewicht des verstärkenden Füllstoffs.

6. Luftreifen nach einem beliebigen der vorhergehenden Ansprüche, wobei der Gehalt an Siliciumdioxid in der Zusammensetzung zwischen 15 und 60 phe liegt und der Gehalt an Ruß in der Zusammensetzung zwischen 5 und 35 phe, vorzugsweise zwischen 10 und 35 phe, liegt.

7. Luftreifen nach einem beliebigen der vorhergehenden Ansprüche, wobei der Ruß eine spezifische BET-Oberfläche zwischen 70 und 150 m²/g, vorzugsweise zwischen 100 und 120 m²/g, aufweist.

8. Luftreifen nach einem beliebigen der vorhergehenden Ansprüche, wobei der Gesamtgehalt an verstärkendem Füllstoff in der Zusammensetzung zwischen 35 und 90 phe liegt.

9. Luftreifen nach einem beliebigen der vorhergehenden Ansprüche, wobei die Zusammensetzung kein weichmachendes Öl oder weniger als 5 phe davon umfasst.

## Claims

1. Tire (1) for agricultural vehicle comprising a tread (2) intended to come into contact with the ground, which comprises a plurality of bars (3) separated from each other by grooves (4), each bar (3) extending radially outward, over a radial height H, from a base surface (5) to a contact face (6), the grooves (4) being formed by the portions of the base surface (5) separating the bars (3), **characterized in that** the tread comprises a rubber composition based on:
- an elastomeric matrix comprising at least one styrene-butadiene copolymer having a glass transition temperature in the range of -60°C to -10°C, the glass transition temperature being measured by DSC (Differential Scanning Calorimetry) according to ASTM D3418 (1999),
- from 30 to less than 120 parts by weight per hundred parts by weight of elastomer, phr, of reinforcing filler, the reinforcing filler comprising a mixture of silica and carbon black, the reinforcing filler comprising between 33% and 100% by weight of silica relative to the total weight of the reinforcing filler, the silica content in the composition being between 10 and 80 phr, and
- a crosslinking system,
the composition comprising from 35 to 65 phr of styrene-butadiene copolymer having a glass transition temperature in the range of -60°C to -10°C, from 20 to 40 phr of polybutadiene, and from 20 to 40 phr of polyisoprene, the total content of styrene-butadiene copolymer having a glass transition temperature in the range of -60°C to -10°C, polybutadiene, and polyisoprene in the composition being in the range of 80 to 100 phr.

2. Tire according to any one of the preceding claims, wherein the styrene-butadiene copolymer having a glass transition temperature in the range of -60°C to -10°C is a solution-prepared styrene-butadiene copolymer.

3. Tire according to any one of the preceding claims, wherein the glass transition temperature of the styrene-butadiene copolymer having a glass transition temperature in the range of -60°C to -10°C is between -50°C and -15°C.

4. Tire according to any one of the preceding claims, wherein the total content of styrene-butadiene copolymer having a glass transition temperature in the range of -60°C to -10°C, polybutadiene, and polyisoprene in the composition is in the range of 90 to 100 phr, preferably 100 phr.

5. Tire according to any one of the preceding claims, wherein the reinforcing filler comprises between 33% and 70% by weight, preferably between 35% and 67% by weight, of silica relative to the total weight of the reinforcing filler.

6. Tire according to any one of the preceding claims, wherein the silica content in the composition is between 15 and 60 phr, and the carbon black content in the composition is between 5 and 35 phr, preferably between 10 and 35 phr.

7. Tire according to any one of the preceding claims, wherein the carbon black has a specific BET surface area in the range of 70 to 150 m²/g, preferably between 100 and 120 m²/g.

8. Tire according to any one of the preceding claims, wherein the total content of reinforcing filler in the composition is in the range of 35 to 90 phr.

9. Tire according to any one of the preceding claims, wherein the composition does not contain plasticizing oil or contains less than 5 phr.
